# EUROPEAN PATENT APPLICATION

(11) **EP 4 636 727 A1**
(43) Date of publication of application: **22.10.2025**
(21) Application number: 24170235.6
(22) Date of filing: 15.04.2024
(51) Int. Cl.: G08G 1/00, H04W 4/021

(54) **FLEET GEOFENCING**

(71) Applicant: Hiab AB, 215 32 Malmö (SE)
(72) Inventor: Era, Lauri, 21200 Raisio (FI)
(74) Representative: Papula Oy

(57) **Abstract**

Disclosed is fleet geofencing for mobile working equipment. A plurality of indications of position status and working status for a piece of mobile working equipment of the fleet of mobile working equipment may be received, the plurality of indications of position status and working status being time stamped. Based on the plurality of indications of working status, one or more indications of working time are determined for the piece of mobile working equipment and, based on the plurality of indications of position status and the one or more indications of working time, one or more home locations for geofencing the piece of mobile working equipment are set up.

## Description

### FIELD

The present disclosure relates to geofencing a fleet of mobile working equipment.

### BACKGROUND

At the moment there are solutions available for geofencing mobile devices, in which solutions the user needs to define a boundary within which the equipment should stay. However, for controlling a sizable fleet of mobile working equipment, improved solutions for setting up and carrying out the geofencing are required.

### SUMMARY

According to a first aspect, a computer-implemented method for facilitating geofencing a fleet of mobile working equipment is provided. The method may comprise, by a computing system, any or all of the following steps (not necessarily in the order presented). First, receiving a plurality of indications of position status for a piece of mobile working equipment of the fleet of mobile working equipment. The plurality of indications of position status may be time stamped. Second, receiving a plurality of indications of working status for the piece of mobile working equipment. The plurality of indications of working status may be time stamped. Third, based on the plurality of indications of working status, determining one or more indications of working time for the piece of mobile working equipment. Fourth, based on the plurality of indications of position status and the one or more indications of working time, setting up one or more home locations for geofencing the piece of mobile working equipment.

The solution allows combining geofencing with temporal fencing in a manner particularly suitable for operating fleets of mobile working equipment. A geo-temporal fence may be individually and/or collectively set up for pieces of mobile working equipment of the fleet. This can be done based on historical data of the corresponding piece(s) of mobile working equipment, the historical data in particular pertaining to position status and working status of said piece(s) of mobile working equipment. The one or more indications of working time may correspond to one or more times or time ranges when the plurality of indicators of working status indicate that the piece of mobile working equipment is working (or not working), in particular repeatedly. The one or more home locations may correspond to one or more locations where the piece of mobile working equipment repeatedly returns outside of the working time(s) indicated by the one or more indications of working time.

The geo-temporal fence may be set automatically, relieving any operator from the burden of setting up geofencing for the fleet. Importantly, utilizing the time stamped indications of working status allows automatically determining one or more temporal ranges when the piece of mobile equipment is to be in operation. The fleet may thus be operated for a test period, e.g. a month, during which the plurality of indications of position and the plurality of indications of working status are gathered for one or more pieces of mobile working equipment of the fleet, for example for ten or more pieces of mobile working equipment or even 100-1000 or more pieces. Based on the data gathered during the test period, the fleet may be geofenced automatically, while an option for an operator to manually adjust the one or more indications of working time and/or the one or more home locations may still be provided.

In an embodiment, the method comprises receiving an indication of position for the piece of mobile working equipment, the indication of position being time stamped with an indication of time, and generating an alert when the indication of position is outside the one or more home locations and/or the indication of time is outside working time as indicated by the one or more indications of working time. This may be performed by the computer system. This allows automatically monitoring the geo-temporal fence set up for the piece(s) of mobile working equipment with improved efficiency.

In an embodiment, the method comprises determining an identity of the piece of mobile working equipment with a unique identifier of the piece of mobile working equipment. This may be performed by the computer system. The unique identifier may be provided together with the plurality of indications of position status and/or the plurality of indications of working status.

In an embodiment, the one or more indications of working time for the piece of mobile working equipment are determined utilizing a threshold of occurrences for the plurality of indications of working status within a time range. This allows automatically filtering infrequent occurrences from the indications of working status.

In an embodiment, the one or more home locations for the piece of mobile working equipment are determined by utilizing a clustering algorithm for the plurality of indications of position status. This allows automatically filtering irrelevant locations from the indications of position status with improved efficiency. The one or more home locations can be automatically identified as locations where the indications of position status cluster.

In an embodiment, the indications of position status comprise an indication of movement for the piece of mobile working equipment. Setting up one or more home locations for geofencing the piece of mobile working equipment may then comprise filtering out one or more of the plurality of indications of position status based on the indication of movement indicating movement of the piece of mobile working equipment. This allows automatically limiting the one or more home locations to locations where the piece of mobile working equipment is stationary.

In an embodiment, the plurality of indications of position status and/or the plurality of indications of working status are time stamped utilizing one or more clocks at the piece of mobile working equipment. The time stamping can thus be performed when recording data for said indications, e.g. a position for the piece of mobile working equipment, so that the time stamping faithfully corresponds to the time when the data is recorded. This allows improved reliability for the system as time stamped information for said indications can be recorded at the piece of mobile working equipment, even when the piece is not online. The pieces of mobile working equipment of the fleet may operate in conditions where they cannot always update their status to a remote control system such as the computer system so that upon reconnection to the remote control system updates could be flooded with multiple indications of position status at various locations for receipt at the remote control system. This could lead to false alarms and alerts if the time stamping is performed at the remote control system as various indications for which data is originally recorded at different times would still receive the same time stamp.

Similarly, any indication(s) of position for the piece(s) of mobile working equipment of the fleet may be time stamped utilizing the one or more clocks at the piece of mobile working equipment. All time stamping allows reducing lag thereby improving reliability for the solution.

In an embodiment, the indications of working status correspond to indicators of engine rotation for the piece of mobile working equipment, such as rpm (revolutions per minute) of an engine actuating movements of one or more parts of the piece of mobile working equipment. This indicator can be utilized flexibly with various types of mobile working equipment. The piece of mobile working equipment may be considered to be in operation when its engine rotation exceeds a threshold level, for example.

In an embodiment, the method comprises periodically repeating an update sequence for updating the one or more home locations for geofencing the piece of mobile working equipment. This may be performed by the computer system. This allows automatically updating the geofencing.

In an embodiment, the fleet of mobile working equipment comprises a plurality of pieces of mobile working equipment. The one or more home locations for geofencing the piece of mobile working equipment may then be set up for geofencing each of the plurality of pieces of mobile working equipment. Accordingly, the one or more home locations may be set up the same for the plurality of pieces of mobile working equipment. The one or more indications of working time may also be set the same for the plurality of pieces of mobile working equipment but they may also be separately determined for each of the pieces of mobile working equipment of the plurality of pieces of mobile working equipment. These features allow improved geofencing and control of the fleet.

According to a second aspect, a fleet controller is disclosed. The fleet controller may be configured for performing any or all parts of the method, including any of the embodiments, described above. In particular, the fleet controller may be configured for any or all of the following (to be performed in the stated order or in any other applicable order). First, receiving a plurality of indications of position status for a piece of mobile working equipment of a fleet of mobile working equipment. The plurality of indications of position status may be time stamped. Second, receiving a plurality of indications of working status for the piece of mobile working equipment. The plurality of indications of working status may be time stamped. Third, based on the plurality of indications of working status, determining one or more indications of working time for the piece of mobile working equipment. Fourth, based on the plurality of indications of position status and the one or more indications of working time, setting up one or more home locations for geofencing the piece of mobile working equipment.

In an embodiment, the fleet controller is configured for receiving an indication of position for the piece of mobile working equipment. The indication of position may be time stamped with an indication of time. The fleet controller may be also configured for generating an alert when the indication of position is outside the one or more home locations and/or the indication of time is outside the working time indicated by the one or more indications of working time.

According to a third aspect, a fleet control system comprises the fleet controller according to the second aspect, possibly including any combination of its embodiments, and an onboard device. The onboard device may be arranged for onboard coupling with the piece of mobile working equipment. It may comprise any or all of the following: one or more position trackers, one or more clocks and one or more processing units. The one or more processing units may be configured for connecting to a control system of the piece of mobile working equipment for providing the plurality of indications of working status, to the one or more position trackers for providing the plurality of indications of position status for the piece of mobile working equipment and to the one or more clocks for time stamping the indications of position status and the indications of working status.

According to a fourth aspect, a computer program product is disclosed, comprising instructions which, when executed by a computer, cause the computer to carry out the method of the first aspect, possibly including any combination of its embodiments.

The disclosed solutions allow automatic geo-temporal-fencing for a fleet of mobile working equipment. The solutions allow automatic tracking of pieces of mobile working equipment with indications of position status, for example based on GPS information. According to the solutions, this can be combined and enhanced with indications of time and working status for the piece of mobile working equipment, i.e. equipment usage information.

The solutions allow utilizing the working schedule of the piece(s) of mobile working equipment, for example for time of day and/or day of week, which may affect heavily where the piece(s) of mobile working equipment should be allowed to be. In contrast to the pre-existing solutions relying on operators for doing a lot of work in defining boundaries for geofencing, the present solutions allow detecting and defining geographical and temporal boundaries in an automated way.

It is to be understood that the aspects and embodiments described above may be used in any combination with each other. Several of the aspects and embodiments may be combined together to form a further embodiment of the invention.

### BRIEF DESCRIPTION OF THE DRAWINGS

The accompanying drawings, which are included to provide a further understanding and constitute a part of this specification, illustrate examples and together with the description help to explain the principles of the disclosure. In the drawings:
**Fig. 1** illustrates a method according to an example, and
**Fig. 2** schematically illustrates a fleet control system according to an example.

Like references are used to designate equivalent or at least functionally equivalent parts in the accompanying drawings.

### DETAILED DESCRIPTION

The detailed description provided below in connection with the appended drawings is intended as a description of examples and is not intended to represent the only forms in which the example may be constructed or utilized. However, the same or equivalent functions and structures may be accomplished by different examples.

The presently disclosed solutions may be used for fleet control and/or facilitating fleet control for a fleet of mobile working equipment. In particular, they may be used for geofencing and/or facilitating geofencing the fleet of mobile working equipment. This may be automated as all the steps may be implemented by a computing system, which may be a distributed computing system.

The fleet may comprise a plurality of pieces of mobile working equipment. The piece of mobile working equipment referred throughout this disclosure may be, for example, a vehicle-mounted device such as a truck-mounted device. In particular, the piece of mobile working equipment may be a hoisting, lifting, load handling or hauling device, or any combination of the aforementioned devices. The pieces of mobile working equipment may comprise one or more movable working equipment actuators arranged to facilitate any or all of hoisting, lifting, load handling and hauling, for example loading and/or unloading loads (such as cargo objects) to and/or from a vehicle on which they are mounted. The pieces of mobile working equipment may be arranged for various applications such as transportation, cargo handling, waste handling or construction. The piece of mobile working equipment may be a forklift such as a truck-mounted forklift, a mobile crane such as a loader crane or a forestry crane, a hook-lift, a skiploader or a tail lift. The fleet may comprise a single type of a mobile working equipment, for example any of the types mentioned above, or multiple different types of mobile working equipment, for example any combination of the types mentioned above.

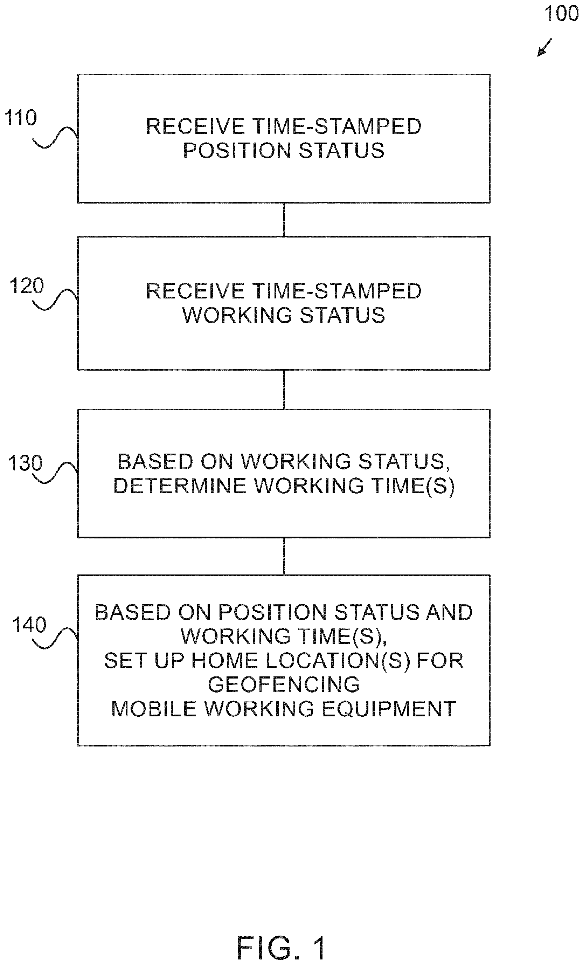

Fig. 1 shows an example of a computer-implemented method 100. The method comprises several parts which may be performed independently from each other and/or in any order. The method can be used for geofencing and/or facilitating geofencing the fleet of mobile working equipment so that it can be used for determining both geographical and temporal regions for geofencing. This may be automated as all the steps may be implemented by a computing system, which may be a distributed computing system.

The method 100 may comprise receiving 110 a plurality of indications of position status for one or more pieces of mobile working equipment of the fleet of mobile working equipment. Such an indication of position status may comprise an indication of position, such as a GPS (Global Positioning System) location, of its corresponding piece of mobile working equipment. The indication of position may be provided including coordinates such as two- or three-dimensional coordinates of the piece of mobile working equipment. The indication of position status may additionally comprise an indication of movement for the piece of mobile working equipment, allowing to determine whether the piece of mobile equipment is moving or not, for example by indicating the speed of the piece of mobile working equipment. Movement here may be understood as translational motion of the piece of mobile working equipment as a whole (as opposed to the piece of mobile working equipment moving in place when it is operating), in particular indicating that any entity, such as a vehicle, carrying the piece of mobile working equipment is in translational motion.

The method 100 may also comprise receiving 120 a plurality of indications of working status for the one or more pieces of mobile working equipment. Such an indication of working status is an indication that the corresponding piece of mobile working equipment is in operation, for example that it is hoisting, lifting or hauling. In particular, the indication(s) of working status may correspond to indicator(s) of engine rotation for the piece of mobile working equipment. Accordingly, it may be determined that the piece of mobile working equipment is in operation, i.e. that its working status is positive, if the engine rotation exceeds a pre-determined threshold, which may be a zero threshold (e.g. zero engine revolutions per minute) but also larger. Alternatively or additionally, the indication(s) of working status may be determined from the engine rotation being below the pre-determined threshold, i.e. that the piece of mobile working equipment is not in operation. Other parameters connected to the operation of the piece of mobile working equipment may alternatively or in combination be used to deduce if the piece of mobile working equipment is in operation or not. The piece of mobile working equipment may e.g. be based on a hydraulic system operated by a pump that may in turn be driven via a battery or a power take-off of a vehicle, such as a truck, that the piece of mobile working equipment is mounted to. Alternatively, for fully electric pieces of mobile working equipment other parameters may be relevant, e.g. connected to its battery supply.

The plurality of indications of position status and/or the plurality of indications of working status may be time stamped. An indication of time may thus be associated with each of the plurality of indications of position status and the plurality of indications of working status allowing it to be tracked at what time the piece of mobile working equipment has been in each of the positions indicated by the indications of position status and whether it was in operation at that time. The plurality of indications of position status and/or and the plurality of indications of working status may in particular be time stamped utilizing one or more clocks at the piece of mobile working equipment, thereby allowing the indication of time of the time stamp to correspond to the actual time when the piece of mobile working equipment was in the position indicated by the indication of position status and in the working state indicated by the indication of working status.

An identity of the piece of mobile working equipment may also be provided. This may be done with a unique identifier of the piece of mobile working equipment. The identifier may be provided together with the indications of position status and/or the indications of working status of the corresponding piece of mobile working equipment.

The plurality of indications of position status and/or the plurality of indications of working status may be provided and/or received in any order, also concurrently. The indications of position status may be jointly time stamped with the indications of working status so that they share a time stamp or they may be time stamped separately so that each has its own time stamp.

After receiving at least the plurality of indications of working status, the method 100 may comprise determining 130 one or more indications of working time for the piece of mobile working equipment, based on the plurality of indications of working status. The indications of working time can indicate the times when the corresponding piece(s) of mobile working equipment is in operation (i.e. working) and/or is not in operation (since an indication of non-working time can be in the negative used as an indication of working time). Since the plurality of indications of working status are time stamped, the indication(s) of working time can be directly determined from them using any means of pattern recognition available to a person skilled in the art.

As an example, a threshold of occurrences may be set for the plurality of indications of working status within a time range. This threshold may be one or larger, and using a larger threshold allows ignoring potentially irrelevant outliers. For example, a threshold of 2 or more occurrences may be set for each time interval, e.g. of one hour, on a weekday. If the number of occurrences of indications of time associated with a positive indication of working status for the piece of mobile working equipment (i.e. an indication of working status indicating that the piece of mobile working equipment was in operation) that fall within a time interval is equal or larger than said threshold, said interval may be determined as a working time of the one or more indications of working time. Similarly, if the number of occurrences of indications of time associated with a positive indication of working status for the piece of mobile working equipment that fall within a time interval is (equal or) smaller than said threshold, said interval may be determined as a non-working time for providing the one or more indications of working time.

Another example using the threshold of occurrences is to define a time interval as working time if at least a certain percentage of time, e.g. 10 percent or higher, it has been observed as a working time for the plurality of indications of working status. A time interval may also be indicated as working time if a previous time interval and/or a following time interval has been indicated as working time. Conversely, the definitions can be made based on non-working time.

The one or more indications of working time may be determined using either or both of the working time and the non-working time, and the indications themselves may correspond to working time and/or non-working time. The one or more indications of working time may indicate a day of the week and/or a time of the day. The one or more indications of working time may correspond to time ranges, which may be of the same length or of varying lengths. The one or more indications of working time may be used for temporal fencing of the piece of mobile working equipment, and also of the whole fleet. In particular, the one or more indications of working time may be associated to individual pieces of mobile working equipment of the fleet, thereby allowing different pieces of mobile working equipment of the fleet to have different working times.

The method may comprise setting up 140 one or more home locations for geofencing the piece of mobile working equipment, based on the plurality of indications of position status and/or the one or more working times. The one or more home locations may be used for geofencing the whole fleet of the mobile working equipment or one or more subfleets of the mobile working equipment, such subfleet(s) each comprising a plurality of pieces of mobile working equipment. The home location(s) may be indicated, for example, as two dimensional spatial areas, e.g. on a map, and/or as one dimensional points with threshold distances from said points, wherein anything within the threshold difference from said points is within the home location and anything farther away from said points than the threshold difference is outside the home location.

In particular, the same one or more home locations may be set for multiple pieces of mobile working equipment of the fleet, thereby allowing different pieces of mobile working equipment to be simultaneously configured with the same home location(s), thereby saving resources and potentially increasing accuracy. Since the plurality of indications of position status are time stamped, the home location(s) can be directly determined from them using any means of pattern recognition available to a person skilled in the art. Any or all of locations determined from pattern recognition as locations where the piece(s) of mobile working equipment repeatedly reside and/or return, in particular outside working time as indicated by the one or more indications of working time, may be set up as the one or more home locations.

In particular, the one or more home locations for the piece of mobile working equipment may be determined by utilizing a clustering algorithm for the plurality of indications of position status. Clustering algorithms allow spatially recognizing locations where the data points (here indications of position status) cluster and any or all of such clustering locations may be set up as the one or more home locations. Any applicable clustering algorithm available to a person skilled in the art may be used, for example a DBSCAN algorithm and/or a k-means algorithm.

The one or more indications of working time may be utilized for setting up the one or more home locations. In particular, they may be utilized for filtering out any or all indications of position status of the plurality of indications of position status which have been time stamped with an indication of time corresponding to working time as indicated by the one or more indications of working time (herein also "the working-time position indications"). This way, working locations of the piece(s) of mobile working equipment can be avoided when automatically setting up the home location(s). The pattern recognition for setting up the one or more home locations, e.g. by the clustering algorithm, may be performed for a reduced set of the plurality of indications of positions status, in which reduced set any or all of the working-time position indications have been removed. The reduced set may thus consist solely of non-working time position indications.

Similarly, the indication of movement may be utilized for setting up the one or more home locations. In particular, it may be utilized for filtering out any or all indications of position status of the plurality of indications of position status which have the indication of movement as positive (i.e. indicating translational movement of the piece of mobile working equipment). This way, indications of position for which the piece of mobile working equipment is in movement can be avoided when automatically setting up the home location(s). The pattern recognition for setting up the one or more home locations, e.g. by the clustering algorithm, may be performed for the reduced set of the plurality of indications of positions status, in which reduced set any or all of the position indications corresponding to a positive indication of movement have been removed. The reduced set may thus consist solely of position indications for which the indication of movement is negative.

The method 100 may comprise periodically repeating an update sequence for updating the one or more indications of working time and/or the one or more home locations for geofencing the piece of mobile working equipment. The update sequence may be performed with irregular or regular intervals, for example once a month. The update sequence may involve adding one or more new home locations to the one or more home locations and/or deleting one or more obsolete home locations from the one or more home locations. The one or more obsolete home locations may be determined, for example, as such home locations of the one or more home locations that are not identified as home locations in one or more runs of the update sequence, for example not being identified as home locations for a threshold number of subsequent runs of the update sequence. The threshold number may be two, three or higher.

As an example, the update sequence may be performed automatically as follows. For every hour of every weekday, it may be defined separately for each piece of mobile working equipment of the fleet, whether said hour of said weekday is working time. Based on the indication(s) of working time and indications of position status for the piece(s) of mobile working equipment, an auxiliary list of home locations may be determined. If this auxiliary list includes new home locations not yet part of the one or more home locations, these new home locations may be added to the one or more home locations. If the auxiliary list is missing some home locations included in the one or more home locations, these home location of the one or more home locations may be marked. If the marked home locations are missing in a number of consecutive updates, e.g. three updates (which in this example corresponds to three months), such marked home locations are no longer considered as home locations and are thus removed from the one or more home locations.

The geofencing may be defined in terms rules 232. The rules may comprise or consist of home location(s) 234 and/or indication(s) of working time 236. They may be for the fleet or for individual pieces of mobile working equipment of the fleet but in a specific embodiment the home location(s) are determined for the fleet, comprising the plurality of pieces of mobile working equipment, as a whole, whereas the indication(s) of working time are determined for the plurality of pieces of mobile working equipment individually.

In addition to setting up the one or more home locations for geofencing the piece(s) of mobile working equipment, the method may also comprise, in particular by the computer system, generating an alert when the geofencing is breached. For this, the method may comprise receiving an indication of position for the piece of mobile working equipment. This indication of position may obtained in a similar manner as the indications of position status as indicated above, as the indications of position status may comprise such an indication of position. The indication of position may be time stamped with an indication of time. The indication of position may be compared with the one or more home locations and the indication of time with the one or more indications of working time for the piece of mobile working equipment. The method may then comprise generating an alert when the indication of position is outside the one or more home locations and/or the indication of time is outside working time as indicated by the one or more indications of working time. In particular, the combined condition of the indication of position being outside the one or more home locations and the indication of time being outside working time as indicated by the one or more indications of working time has been found to facilitate particularly effective geo-temporal fencing for fleets of mobile working equipment as their size scales up in a manner not possible with pre-existing technology.

The alert may comprise a visual and/or an aural alert. It may comprise transmitting one or more control commands for the piece of mobile working equipment, for example to prevent the piece of mobile working equipment from operating. The fleet may be automatically monitored with continuous or repeated monitoring for generating the alert (s). The alerts may hence be part of a system for the operator of the fleet to prevent or investigate possible theft and/or other unauthorized used of the piece(s) mobile working equipment.

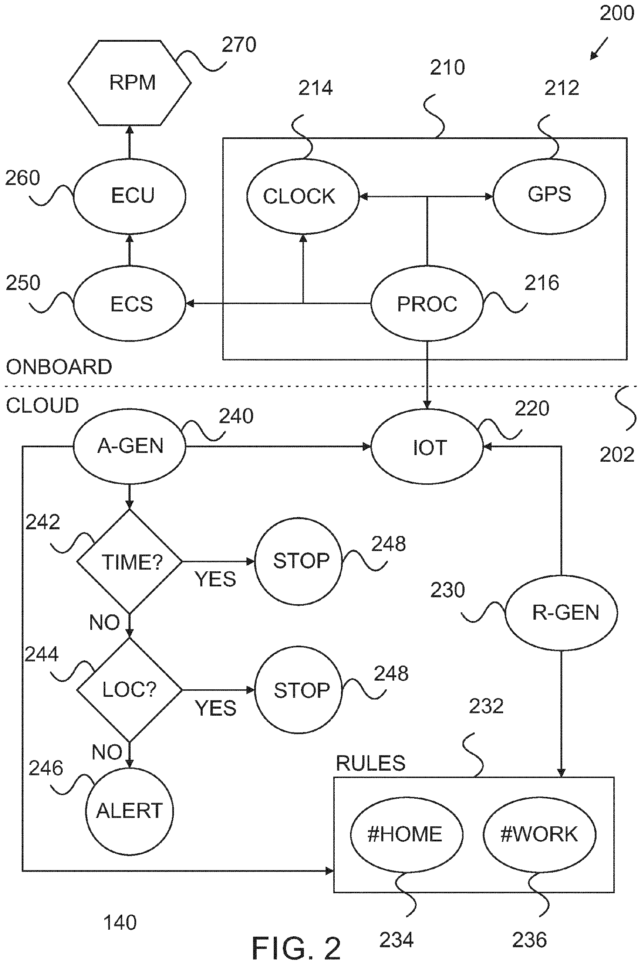

Fig. 2 shows a schematic example of a fleet control system 200 (herein also "the system"). Any of features described with reference to the method 100 are applicable also in connection of the system 200. The system may comprise components both onboard one or more pieces of mobile working equipment and remote from said one or more pieces of mobile working equipment. Parts onboard the piece(s) of mobile working equipment are illustrated above a separation line 202, whereas parts remote from the piece(s) of mobile working equipment are illustrated below the separation line.

The fleet control system 200 may comprise one or more onboard devices 210 and/or a fleet controller (illustrated below the separation line 202). The onboard device(s) and the fleet controller may also be provided separately as their own entities. Each of the onboard devices may be associated with its own piece of mobile working equipment of the fleet, on which it may be mounted onboard. The number of pieces of mobile working equipment of the fleet and thereby the onboard devices controlled by the fleet control system and the fleet controller may be increased without limit, for example to 10-100 or more.

The fleet controller (herein also "the controller") may be provided as a single unit and/or as multiple units with distributed processing. The controller may comprise one or more processors and one or more memories. The one or more memories may comprise instructions which, when run by any or all of the one or more processors cause the controller to perform any or all of the acts described herein for the controller. In particular, this involves any or all of the features described for the method 100.

In particular, the fleet controller may comprise one or more communication interfaces 220, such as IOT (internet of things) platforms. The communication interface(s) may be configured for receiving data from and/or transmitting data to the onboard device(s) of the fleet. This may be done by wireless communication using any wireless communication means known to a person skilled in the art.

The fleet controller may comprise a rule creation engine 230 and/or an alert generation engine 240. The rule creation engine and the alert generation engine may be provided within the same unit of the fleet controller or within separate units, which may be coupled for communication with each other but not necessarily. Accordingly, rule creation and alert generation for the fleet may be performed by the same physical unit or by different physical units. The rule creation engine and/or the alert generation engine may be coupled to the one or more communication interfaces 220 for transmitting data to and/or receiving data from the piece(s) of mobile working equipment of the fleet, in particular to/from the onboard device(s) 210. The rule creation engine and/or the alert generation engine may be coupled to the same communication interface 220 or to separate communication interfaces 220, in particular when rule creation and alert generation are performed by separate units. The rule creation engine and/or the alert generation engine may be provided by the one or more processors and the one or more memories.

The rule creation engine 230 may be configured for performing the method 100 as described herein, in particular any or all steps for setting up 140 the one or more home locations for geofencing the piece(s) of mobile working equipment of the fleet. Accordingly, the rule creation engine may also be configured for determining 130 the one or more indications of working time for the piece(s) of mobile working equipment of the fleet. The rule creation engine may additionally be configured for periodically repeating the update sequence for updating the one or more indications of working time and/or the one or more home locations for geofencing the piece of mobile working equipment. Based on any or all of the steps above, the rule creation engine may be configured to generate one or more rules 232 for geofencing, which rules may be defined in terms of one or more home location (s) 234 and/or one or more indication(s) 236 of working time. The home location(s) and/or the indication(s) of working time may be generated using historical data of the fleet, for example from one or more months or one or more years of operating the fleet. The historical data may include the plurality of indications of working status for any or all pieces of mobile working equipment of the fleet and/or the plurality of indications of position status for any or all pieces of mobile working equipment of the fleet.

The alert generation engine 240 may be configured to utilize the one or more rules 232 from the rule creation engine 230 to generate an alert when the geofencing as defined by the one or more rules 232 is breached. The alert generation engine may be configured to generate the alert as indicated above with reference to the method 100. The fleet controller, in particular a unit configured for monitoring the fleet for alerts, e.g. the alert generation engine, may be configured to receive one or more indications of position for one or more pieces of mobile working equipment of the fleet, for example through the one or more communication interfaces 220. The indication of position is time stamped with an indication of time. While this time stamping could be performed at the fleet controller, in a particular embodiment it is performed at the onboard device(s) 210.

As an example, the alert may be generated by determining whether the indication of position is outside the one or more home locations and/or whether the indication of time is outside working time as indicated by the one or more indications of working time. In an embodiment, if the answer to both questions is yes, the alert is then generated. If the answer to either of the questions is no, the alert is not generated. The same is illustrated in another manner in Fig. 2, where it is determined whether 242 the indication of time corresponds to working time (as indicated but the indication(s) of working time) and whether 244 the indication of position corresponds to the home location (s) . If the answer to both questions is no, the alert is then generated 246. If the answer to either of the questions is yes, the alert is not generated 248.

In accordance with the present disclosure, the same information, in particular the indications of position status, may be used both for setting up the geofencing and monitoring the geofencing for generating the alerts. Both actions may be performed by the same fleet controller, and the same unit of the fleet controller in particular. They may also be performed by different units of the fleet controller as a distributed computing system. For setting up the geofencing, the indications may be collected over a length of time so that it can be considered historical data. In contrast, for monitoring, live data may be used, e.g. the most recent (time stamped) indications of position received from the fleet or the piece(s) of mobile working equipment thereof.

The fleet control system 200, or the fleet controller, may comprise one or more speakers for providing the alert as an aural alert. Alternatively or additionally, the fleet control system 200, or the fleet controller, may comprise one or more displays and/or visual indicators for providing the alert as a visual alert. Yet alternatively or additionally, the fleet control system 200, or the fleet controller, may have a communication channel to a client device, such as a mobile phone or a tablet, for providing the alert, for example by any means indicated above, such as alert messages and/or audible alerts. The client device may be equipped with an app for communicating with the fleet control system 200 for receiving the alerts. The app may also be configured for executing the alerts, e.g. by displaying and/or playing the alerts.

The onboard device(s) 210 may be provided for any or all of the pieces of mobile working equipment, for example as IOT gateways. The onboard device(s) 210 can be configured to be mounted onboard together with the piece(s) of mobile working equipment. They may be configured to be mounted directly to their corresponding piece of mobile working equipment and/or integrated at their corresponding piece of mobile working equipment. They may also be configured to be mounted onboard separate but in connection with their corresponding piece of mobile working equipment. The onboard device(s) may be configured to be coupled to an equipment control system (ECS) 250 of their corresponding piece of mobile working equipment. This allows obtaining working status information from the piece of mobile working equipment for providing the indication(s) of working status for the piece of mobile working equipment. The working status information may be received from one or more sensors 270, such as engine speed sensors, of the piece of mobile working equipment. The working status information may be received from the one or more sensors to the onboard device(s) 210 through the engine control unit (ECU) 260 and/or the equipment control system 250 of the piece(s) of mobile working equipment.

Any or all of the one or more onboard devices 210 may comprise one or more position trackers, such as GPS devices, e.g. GPS receivers. These may be configured for facilitating providing of the indications of position status and/or the indications of position.

Any or all of the one or more onboard devices 210 may also comprise one or more processing units. These may comprise one or more processors and one or more memories. The one or more memories may comprise instructions which, when run by any or all of the one or more processors cause the onboard device to perform any or all of the actions of the onboard device (s) as described herein.

Any or all of the one or more onboard devices 210, e.g. by the processing unit(s), may be configured for obtaining the working status information from the piece of mobile working equipment for providing the indication(s) of working status for the piece of mobile working equipment, e.g. from the equipment control system and/or the one or more sensor (s) of the piece of mobile working equipment. Any or all of the one or more onboard devices 210, e.g. by the processing unit(s), may be configured for obtaining the position status information from the position tracker(s). Said onboard device(s) may be configured for repeatedly requesting the working status information and/or the position status information, for example at fixed time intervals, such as at intervals of 1-60 seconds when the piece of working equipment is in operation and/or in transit. Alternatively or additionally, the onboard device(s) may be configured for receiving the working status information and/or the position status information, for example over a data bus such as a CAN (controller area network) bus. The onboard device(s) may be configured for using a longer time interval for requesting the working status information and/or the position status information when it has determined that the piece(s) of mobile working equipment are idle (i.e. not in operation) and/or stationary (i.e. not in movement as detailed above). Conversely, shorter time intervals may be used when the onboard device has determined that the piece(s) of mobile working equipment are in operation) and/or in movement.

Any or all of the one or more onboard devices 210 may also comprise one or more clocks, such as real-time clocks. These may be mounted at the piece(s) of mobile working equipment and thereby considered as internal clocks for said piece(s) of mobile working equipment. The clock(s) may be configured for facilitating providing of the indications of position status and/or the indications of position. Any or all of the one or more onboard devices 210, e.g. by the processing unit(s), may be configured for using the one or more clocks for time stamping information provided from the position tracker(s) and/or from the piece(s) of mobile working equipment, in particular for providing the indications of position status for the piece(s) of mobile working equipment, which are time stamped, and/or the indications of working status for the piece(s) of mobile working equipment, which are time stamped. Similarly, the indications of position for any or all of the pieces of mobile working equipment may be provided.

Any or all of the one or more onboard devices 210, e.g. by the processing unit(s), may be configured for providing the indications of position status for the piece(s) of mobile working equipment and/or the indications of working status for the piece of mobile working equipment (and/or the indications of position for any or all of the pieces of mobile working equipment) to the fleet controller, for example to the communication interface 220. For this purpose, the onboard device(s) 210 may comprise an onboard communication interface, for example a wireless communication interface.

An example of the operation of the onboard device(s) 210 is as follows. The onboard device(s) may poll the equipment control system 250 every few seconds, when the piece of mobile working equipment is in operation, for the working status information. Alternatively or additionally, the onboard device may simply receive said information from the equipment control system, for example over the CAN bus as indicated above. Any signal returned from the equipment control system may be time stamped utilizing the clock(s) 214. Similarly, the onboard device(s) may poll the location tracker 212 every few seconds, when the piece of mobile working equipment is in operation and/or moved, for the position status information. When the operation and/or the movement stops, the onboard device(s) may first poll the location tracker at a first longer interval, e.g. 10 minutes, and then at a second even longer interval, e.g. 6 hours. The onboard device(s) may be configured to collect and package the working status information and/or the position status information and send it for the fleet controller, e.g. into cloud, at time intervals, which may be fixed, e.g. once every couple of minutes. The information, such as the indications of working status and/or the indications of position status, may be time stamped.

An example of the overall solution is as follows. The onboard device (s) 210, e.g. as IOT gateway devices, may thus receive information from the ECS 250 of the piece(s) of mobile working equipment and track the position of the piece(s) of mobile working equipment, e.g. with GPS coordinates. They may also record observation times (e.g. by time stamping) for either or both forms of abovementioned information with the clock(s) 214. Onboard the piece(s) of mobile working equipment is an engine, which may have an engine control unit (ECU) and one or more sensors for recording working status information for the engine, such as the engine speed (RPM). Below RPM is referred but this may be replaced by any other working status information.

The method may include any or all of the following steps:
- The ECU reads the RPM values from the sensor.
- The equipment control system requests the values from the ECU.
- The onboard device requests the RPM values from the equipment control system.
- The onboard device records the time of observation for each RPM value.
- The onboard device records the position information for the piece of mobile working equipment.
- The onboard device sends the recorded data to the fleet controller, for example to an IoT platform in the cloud.
- The fleet controller checks from the data if the time of observation is during the working time of the equipment.
- If the time of observation is during working time the processing may be stopped.
- If the time of observation is not during working time the fleet controller checks whether the piece of mobile working equipment is located in any of the allowed locations defined for non-working time for that equipment (these may correspond to the home locations) .
- If the equipment is within an allowed location for non-working time (a home location) the processing is stopped.
- If the equipment is not within an allowed location for non-working time (a home location) an alert is generated.

The piece(s) or mobile working equipment of the fleet may be allowed to be anywhere during the working time. Geographical restrictions (or geofencing) may be imposed only on other times. This approach of smart geo-temporal-fencing can take into account hours of the day and days of the week for the working time. Working hours may thus be defined for the piece(s) of mobile working equipment within the context of geofencing. Both the location boundaries and temporal boundaries may be defined automatically using the own history of observations of the piece(s) of mobile working equipment.

This automated process may be rerun periodically so that if and when the working time patterns and/or home locations change the geofencing will automatically adapt to the new working time and/or locations.

As advantage of this approach, the very dynamic nature of the way fleets of mobile working equipment are used can be taken into account at least in two ways: firstly, by taking into account the time and working status information (such as engine speed information) and, secondly, by periodically rerunning the process to automatically detect changes in the required boundaries. Another advantage is saving a lot of time and effort from the users of the system, with the automated way in which the required geographical and temporal boundaries are derived. This kind of approach can benefit any users who need to monitor a fleet of mobile equipment, especially those who need to consider and protect against theft and unauthorised use of their equipment.

The solutions involve setting up one or more rules for the geographical area for geofencing and subsequent monitoring. The solution can save time for initial set-up of geofencing. It allows home location(s) and working time (e.g. working hours) be defined by historical data of the fleet. In particular, home location(s) may be defined per fleet, working time per fleet or per piece of mobile working equipment. The home location(s) and/or the indications of working time may be further configured by user.

The solutions allow combination of geoposition and time for geofencing the piece (s) of mobile working equipment. Unauthorised use (defined by time and position) may then generate an alert. A gps-signal, time stamp and optionally rpm values (to define work) may be sent from (the onboard devices) of the pieces of mobile working equipment. The solutions may be utilized with an API (application programming interface) to another system. The solutions may be implemented utilizing one or more separate units of a fleet controller, for example one unit for rule creation and one for alert generation, or both actions may be taken care of by the same unit or the fleet controller may be implemented as a server and/or a cloud solution.

The controller(s) as described above may be implemented in software, hardware, application logic or a combination of software, hardware and application logic. The application logic, software or instruction set may be maintained on any one of various conventional computer-readable media. A "computer-readable medium" may be any media or means that can contain, store, communicate, propagate or transport the instructions for use by or in connection with an instruction execution system, apparatus, or device, such as a computer. A computer-readable medium may comprise a computer-readable storage medium that may be any media or means that can contain or store the instructions for use by or in connection with an instruction execution system, apparatus, or device, such as a computer. The examples can store information relating to various processes described herein. This information can be stored in one or more memories, such as a hard disk, optical disk, magneto-optical disk, RAM, and the like. One or more databases can store the information used to implement the embodiments. The databases can be organized using data structures (e.g., records, tables, arrays, fields, graphs, trees, lists, and the like) included in one or more memories or storage devices listed herein. The databases may be located on one or more devices comprising local and/or remote devices such as servers. The processes described with respect to the embodiments can include appropriate data structures for storing data collected and/or generated by the processes of the devices and subsystems of the embodiments in one or more databases.

All or a portion of the embodiments can be implemented using one or more general purpose processors, microprocessors, digital signal processors, micro-controllers, and the like, programmed according to the teachings of the embodiments, as will be appreciated by those skilled in the computer and/or software art(s). Appropriate software can be readily prepared by programmers of ordinary skill based on the teachings of the embodiments, as will be appreciated by those skilled in the software art. In addition, the embodiments can be implemented by the preparation of application-specific integrated circuits or by interconnecting an appropriate network of conventional component circuits, as will be appreciated by those skilled in the electrical art(s). Thus, the embodiments are not limited to any specific combination of hardware and/or software.

The different functions discussed herein may be performed in a different order and/or concurrently with each other.

Any range or device value given herein may be extended or altered without losing the effect sought, unless indicated otherwise. Also any example may be combined with another example unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The term 'comprising' is used herein to mean including the method, blocks or elements identified, but that such blocks or elements do not comprise an exclusive list and a method or apparatus may contain additional blocks or elements.

Numerical descriptors such as 'first', 'second', and the like are used in this text simply as a way of differentiating between parts that otherwise have similar names. The numerical descriptors are not to be construed as indicating any particular order, such as an order of preference, manufacture, or occurrence in any particular structure.

Although the invention has been described in conjunction with a certain type of apparatus and/or method, it should be understood that the invention is not limited to any certain type of apparatus and/or method. While the present inventions have been described in connection with a number of examples, embodiments and implementations, the present inventions are not so limited, but rather cover various modifications, and equivalent arrangements, when falling within the purview of the claims. Although various examples have been described above with a certain degree of particularity, or with reference to one or more individual embodiments, those skilled in the art could make numerous alterations to the disclosed examples without departing from the scope of this specification.

## Claims

1. A computer-implemented method for facilitating geofencing a fleet of mobile working equipment, the method comprising, by a computing system:
- receiving a plurality of indications of position status for a piece of mobile working equipment of the fleet of mobile working equipment, the plurality of indications of position status being time stamped,
- receiving a plurality of indications of working status for the piece of mobile working equipment, the plurality of indications of working status being time stamped,
- based on the plurality of indications of working status, determining one or more indications of working time for the piece of mobile working equipment,
- based on the plurality of indications of position status and the one or more indications of working time, setting up one or more home locations for geofencing the piece of mobile working equipment.

2. The method of claim 1, comprising:
- receiving an indication of position for the piece of mobile working equipment, the indication of position being time stamped with an indication of time; and
- generating an alert when the indication of position is outside the one or more home locations and the indication of time is outside working time as indicated by the one or more indications of working time.

3. The method of claim 1 or 2, comprising determining an identity of the piece of mobile working equipment with a unique identifier of the piece of mobile working equipment.

4. The method of any preceding claim, wherein the one or more indications of working time for the piece of mobile working equipment are determined utilizing a threshold of occurrences for the plurality of indications of working status within a time range.

5. The method of any preceding claim, wherein the one or more home locations for the piece of mobile working equipment are determined by utilizing a clustering algorithm for the plurality of indications of position status.

6. The method of any preceding claim, wherein the indications of position status comprise an indication of movement for the piece of mobile working equipment, and setting up one or more home locations for geofencing the piece of mobile working equipment comprises filtering out one or more of the plurality of indications of position status based on the indication of movement indicating movement of the piece of mobile working equipment.

7. The method of any preceding claim, wherein the plurality of indications of position status are time stamped utilizing one or more clocks at the piece of mobile working equipment.

8. The method of any preceding claim, wherein the indications of working status correspond to indicators of engine rotation for the piece of mobile working equipment.

9. The method of any preceding claim, comprising periodically repeating an update sequence for updating the one or more home locations for geofencing the piece of mobile working equipment.

10. The method of any preceding claim, wherein the fleet of mobile working equipment comprises a plurality of pieces of mobile working equipment and the one or more home locations for geofencing the piece of mobile working equipment are set up for geofencing each of the plurality of pieces of mobile working equipment.

11. A fleet controller configured for:
- receiving a plurality of indications of position status for a piece of mobile working equipment of a fleet of mobile working equipment, the plurality of indications of position status being time stamped,
- receiving a plurality of indications of working status for the piece of mobile working equipment, the plurality of indications of working status being time stamped,
- based on the plurality of indications of working status, determining one or more indications of working time for the piece of mobile working equipment, and
- based on the plurality of indications of position status and the one or more indications of working time, setting up one or more home locations for geofencing the piece of mobile working equipment.

12. The fleet controller of claim 11, configured for
- receiving an indication of position for the piece of mobile working equipment, the indication of position being time stamped with an indication of time; and
- generating an alert when the indication of position is outside the one or more home locations and the indication of time is outside working time as indicated by the one or more indications of working time.

13. A fleet control system comprising the fleet controller according to claim 11 or 12 and an onboard device, the onboard device comprising:
- one or more position trackers;
- one or more clocks; and
- one or more processing units configured for connecting to a control system of the piece of mobile working equipment for providing the plurality of indications of working status, to the one or more position trackers for providing the plurality of indications of position status for the piece of mobile working equipment and to the one or more clocks for time stamping the indications of position status and the indications of working status.

14. A computer program product comprising instructions which, when executed by a computer, cause the computer to carry out the method of any of claims 1-10.
